Europäisches Patentamt

(19) European Patent Office

Office européen des brevets

(11) Numéro de publication : **0 133 111**
**B1**

(12) **FASCICULE DE BREVET EUROPÉEN**

(45) Date de publication du fascicule du brevet :
02.03.88

(51) Int. Cl.⁴ : **C 08 K   5/00**, **C 08 L  75/04**,
**C 09 K   3/18**, **B 32 B  17/10**

(21) Numéro de dépôt : **84401516.4**

(22) Date de dépôt : **19.07.84**

(54) Couche transparente en matière plastique resistant à l'embuage et procédé de fabrication.

(30) Priorité : **22.07.83 FR 8312139**

(43) Date de publication de la demande :
**13.02.85 Bulletin 85/07**

(45) Mention de la délivrance du brevet :
**02.03.88 Bulletin 88/09**

(84) Etats contractants désignés :
**BE DE FR GB IT LU NL SE**

(56) Documents cités :
**DE-A- 2 629 779**
**FR-A- 2 192 146**
**FR-A- 2 268 853**
**CHEMICAL ABSTRACTS, vol. 79, no. 14, 8 octobre 1973, pages 54-55, résumé no. 79865y, Columbus, Ohio, US**
**R. GÄCHTER et al.: "Taschenbuch der Kunststoff-Additive", 1979, pages 420-421, Carl Hanser Verlag, Munich, DE;**

(73) Titulaire : **SAINT-GOBAIN VITRAGE**
**Les Miroirs 18, avenue d'Alsace**
**F-92400 Courbevoie (FR)**
**BE FR GB IT LU NL SE**
**VEGLA Vereinigte Glaswerke GmbH**
**Viktoriaallee 3-5**
**D-5100 Aachen (DE)**
**DE**

(72) Inventeur : **Raedisch, Helmer**
**Nizzaallee 36**
**D-5100 Aachen (DE)**
Inventeur : **Scholz, Werner**
**Wohlweg 23**
**D-5100 Aachen (DE)**

(74) Mandataire : **Muller, René et al**
**SAINT-GOBAIN RECHERCHE 39, quai Lucien Lefranc**
**F-93304 Aubervilliers (FR)**

**0 133 111**

## Description

L'invention se rapporte à une couche transparente en matière plastique, ainsi qu'aux vitrages de sécurité recouverts d'une telle couche et utilisés notamment sur les moyens de transport, et elle a trait plus particulièrement à l'amélioration du comportement de ces vitrages lorsque des risques de condensation et de formation de buée se présentent.

On utilise de plus en plus, en grandes dimensions sur les véhicules de transport ou dans le bâtiment, et en petites dimensions dans la lunetterie, les masques, les lentilles, etc., des vitrages de sécurité du type comprenant un support monolithique ou feuilleté, en verre ou en matière plastique et recouverts, par l'intermédiaire d'une couche adhésive, d'une couche de matière plastique transparente antilacérante, c'est-à-dire qu'en cas de bris du vitrage, cette couche recouvre les arêtes vives des éclats en verre et empêche des blessures éventuelles dues à ces arêtes vives ; d'autre part cette couche est autocicatrisable c'est-à-dire qu'elle est constituée d'une matière plastique de laquelle des impressions locales ou des éraflures superficielles disparaissent spontanément après un court laps de temps. De tels vitrages sont décrits par exemple dans les publications de brevet français 2 187 719, 2 316 913, 2 320 563, 2 398 606. Il peut s'agir par exemple d'un vitrage feuilleté comprenant deux feuilles de verre reliées par une feuille intercalaire en matière plastique, par exemple du polyvinylbutyral, et recouvert d'une couche de matière plastique transparente formée essentiellement d'un polyuréthane thermodurcissable.

Les pare-brise d'automobiles notamment peuvent être soumis à de brusques variations de température et d'humidité. Dès que la température de leur surface descend en dessous du point de rosée de l'air ambiant, il y a condensation d'eau, ce qui peut gêner l'automobiliste.

Les effets du phénomène varient d'ailleurs sensiblement suivant le type de surface transparente considéré : sur du verre nu, les gouttes d'eau s'étalent beaucoup plus facilement que sur un film organique. Par simple essuyage du verre nu, on forme un film d'eau relativement régulier et transparent du point de vue optique, dont la présence atténue déjà sensiblement les effets de la condensation. En général, dans le cas d'un film de matière plastique, et cela de façon également sensiblement variable selon la nature du film, les gouttes d'eau de condensation peuvent être beaucoup plus proéminentes et denses ; par simple essuyage, on enlève les gouttes, mais il ne se forme pas de film et l'embuage peut se renouveler plus rapidement.

Diverses solutions ont déjà été proposées pour améliorer le comportement vis-à-vis de la buée de surfaces transparentes en verre ou en matière plastique.

Il est connu, de façon générale, de déposer sur la surface transparente des produits du type hydrophiles, susceptibles de se mélanger à de l'eau lorsqu'il y a risque de buée en formant un film fin et homogène. Par exemple, le dépôt d'une couche de composés du glycol, ou de la glycérine, améliore sensiblement les propriétés des surfaces traitées. Mais ces composés solubles dans l'eau sont éliminés au premier essuyage et doivent donc être perpétuellement renouvelés, ce qui est contraignant et coûteux.

On connaît également, par exemple par le brevet allemand 1 928 409, des méthodes de traitement de surfaces transparentes, afin de leur conférer une bonne résistance à l'embuage, consistant à déposer des couches de polymère du type polyacrylate et/ou polyméthacrylate à groupement hydroxyle. Ces couches très hydrophiles absorbent l'eau sans s'y dissoudre. Du fait de l'absorption d'eau ces films gonflent plus ou moins fortement, se ramollissent et ils deviennent plus sensibles à l'abrasion ce qui, à la longue, nuit à la transparence de la surface traitée.

La mise au point de traitements anti-buée par le dépôt de couches anti-buée superficielles s'est ainsi toujours heurtée à des exigences contradictoires : une meilleure action anti-buée amoindrit la résistance à l'abrasion, tandis qu'à une résistance à l'abrasion accrue correspond une diminution de l'effet anti-buée. On a en effet cherché à renforcer la résistance des couches en introduisant dans leur composition un durcissant. Or ce durcissant réagissant généralement par polycondensation avec les polymères constitutifs de la couche, rend indisponibles les groupements de type hydroxyle qui confèrent à la couche les propriétés hydrophiles favorisant l'action anti-buée.

Dans le cas des vitrages revêtus d'une couche de matière plastique antilacérante et autocicatrisable tels qu'ils sont décrits par exemple dans les publications de brevets français 2 187 719, 2 316 913, 2 320 563, 2 398 606, le problème de l'embuage, bien qu'amoindri par rapport au vitrage monolithique ou feuilleté classique en verre se pose néanmoins, et en des termes pouvant être plus complexes : le vitrage doit être soumis à un traitement qui n'altère en aucun cas les excellentes propriétés d'antilacération et d'autocicatrisation qui font sa spécificité grâce à la présence de la couche de matière plastique transparente ; le traitement doit être efficace pendant un temps très long ; il ne doit pas modifier la nature de la couche de matière plastique, ce qui risquerait d'altérer par ailleurs les propriétés qu'elle confère au vitrage.

La présente invention a donc pour objet une couche de polyuréthane transparente, antilacérante et autocicatrisable, résistant à l'embuage, utilisable notamment dans les vitrages feuilletés décrits ci-dessus, ainsi qu'un procédé pour sa fabrication.

La couche selon l'invention, désignée encore par couche anti-buée, est une couche de polyuréthane transparente, hautement élastique et réticulée tridimensionnellement, contenant au moins un agent tensio-actif dans sa structure réticulée. Par réticulée tridimensionnellement, on entend une structure

2

comportant un certain nombre de liaison de pontage entre chaînes linéaires ou ramifiées. Du fait de l'existence d'un réseau tridimensionnel, il semble que les agents tensio-actifs trouvent des points d'ancrage dans la structure réticulée et ils y restent fixés durablement.

La couche selon l'invention, est donc avantageusement utilisée en tant que couche externe antilacérante et/ou autocicatrisable d'un vitrage feuilleté comprenant un support monolithique ou feuilleté, en verre silicaté ou en matière plastique.

Une telle structure est ainsi particulièrement avantageuse vis-à-vis de la buée : de façon nouvelle et originale, l'agent tensio-actif pénètre dans la couche, tout en conservant les propriétés connues d'hydrophilie dudit tensio-actif. Grâce à la réserve ainsi disponible, l'effet anti-buée persiste beaucoup plus longtemps. En outre, de façon étonnante, on peut observer une amélioration des propriétés de surface de la couche selon l'invention par rapport aux propriétés d'une couche antilacérante et autocicatrisable ne comportant pas d'agent tensio-actif dans sa structure. Ainsi la résistance à l'abrasion notamment est améliorée comme cela est montré dans la suite de la description.

Si l'invention est particulièrement intéressante dans le cas de pare-brise de véhicules automobiles en raison de l'importance de cette application, elle n'y est nullement limitée, et l'invention, vise d'une façon générale à améliorer le comportement vis-à-vis de la buée de différents types de surfaces transparentes recouverts de couche de matière plastique transparente hautement élastique et réticulée tridimensionnellement : par exemple des visières de casques, des lunettes de sécurité, des masques de plongeurs, ces différents objets pouvant également être soumis à des différences importantes de température et d'humidité suivant les circonstances.

L'invention s'applique en particulier à des couches de polyuréthane thermodurcissable. Elle peut aussi s'appliquer à des couches de polyuréthane obtenues par coulée réactive à température élevée, de l'ordre de 80 à 140 °C, à partir de composants essentiellement difonctionnels, ce procédé d'obtention procurant des réactions de ramification donc également une réticulation. Par coulée réactive, on entend la coulée sous forme d'une couche ou d'un film d'un mélange liquide de composants à l'état de monomères ou de prépolymères, suivie d'une polymérisation de ce mélange par la chaleur.

De préférence, l'invention s'applique à une couche de matière plastique transparente formée essentiellement d'un polyuréthane thermodurcissable obtenu à partir d'isocyanates difonctionnels aliphatiques comme le 1,6-hexaméthylènediisocyanate, le 2,4,4-triméthyl-1,6-hexaméthylènediisocyanate, le 2,4-triméthyl-1,6-hexaméthylènediisocyanate, le 1,3-bis(isocyanatométhyl)benzène, le bis(4-isocyanatocyclohexyl)méthane, le bis(3-méthyl-4-isocyanatocyclohexyl)méthane, le 2,2-bis(5'-isocyanatocyclohexyl)propane et le 3-isocyanatométhyl-3,5,5-triméthylcyclohexylisocyanate, ainsi que les biurets, isocyanurates et prépolymères de deux de ces composés ayant une fonctionnalité de 3 ou davantage, et d'autre part de polyols polyfonctionnels, comme les polyols ramifiés tels que les polyesterpolyols et polyétherpolyols obtenus par réaction d'alcools polyfonctionnels, comme le 1,2,3-propanetriol(glycérol), le 2,2-bis(hydroxyméthyl)-1-propanol(triméthyloléthane), le 2,2-bis(hydroxyméthyl)-1-butanol(triméthylolpropane), le 1,2,4-butanetriol, le 1,2,6-hexanetriol, le 2,2-bis(hydroxyméthyl)-1,3-propanediol(pentaérythritol) et le 1,2,3,4,5,6-hexanehexol(sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane, le poids moléculaire des polyols ramifiés étant généralement d'environ 250 à 4 000 et de préférence d'environ 450 à 2 000. Des mélanges de différents polyisocyanates et polyols peuvent être utilisés.

Les tensio-actifs entrant dans la composition de la couche peuvent être des agents tensio-actifs de type non ionique, de type anionique ou cationique. Ils sont de préférence choisis parmi les tensio-actifs non ioniques et parmi eux, notamment, les alcools gras éthoxylés comme l'alcool laurique éthoxylé.

L'invention concerne également un procédé de formation des couches anti-buée. Selon ce procédé, on met la couche en contact avec une composition comprenant au moins un agent tensio-actif dans des conditions et pendant un temps suffisant pour permettre la diffusion de molécules de tensio-actifs dans au moins une partie de l'épaisseur de la couche.

On utilise de préférence une composition sous forme liquide : par exemple, les agents tensio-actifs sont mis en solution, ou ils se présentent sous forme liquide aux températures de mise en œuvre du procédé.

Suivant une caractéristique préférée de l'invention, le traitement de la couche se fait par trempage dans une composition liquide. En outre, la diffusion des molécules de tensio-actifs étant accélérée par une augmentation de température, on exerce une température comprise entre 20 et 120 °C, de préférence entre 80 et 100 °C. En augmentant la température, on réduit parallèlement la durée du traitement qui peut être comprise entre une demi-heure et deux heures.

Suivant une caractéristique supplémentaire de l'invention, le traitement a lieu sous une pression élevée par exemple de l'ordre de 5 à 15 bars, et de préférence de 10 à 15 bars.

La composition du bain de tensio-actifs dans lequel on trempe la couche peut être fort variée, en ce qui concerne le type de tensio-actifs et le cas échéant, le type de solvant ou de diluant. Les agents tensio-actifs peuvent être liquides ou solides, solubles dans un solvant, généralement de l'eau. On peut citer les tensio-actifs de type non ionique, notamment les alcools gras éthoxylés, comme l'alcool laurique éthoxylé, les tensio-actifs solides à dissoudre dans l'eau, du type anionique ou cationique, ou encore des non ioniques dilués.

**0 133 111**

De préférence, on utilise un agent tensio-actif liquide à la température de traitement, du type non ionique.

Dans la mesure où la couche selon l'invention est destinée à entrer dans la composition d'un vitrage de protection, et notamment comme couche externe d'un tel vitrage, il est avantageux, suivant un des aspects de l'invention, d'incorporer le traitement dans le cours de la fabrication du vitrage.

On peut, par exemple, traiter la couche, notamment, en la trempant dans le bain de tensio-actifs, alors qu'elle est sous la forme d'une feuille souple, avant son assemblage avec un support monolithique ou feuilleté en verre de silicate ou en matière plastique pour former le vitrage feuilleté. On se place dans ce cas à pression atmosphérique.

Suivant un aspect préféré de l'invention, on traite la couche, et notamment on la trempe dans le bain de tensio-actifs, alors qu'elle est assemblée de façon préliminaire avec le support, pour former le vitrage feuilleté. Cette variante de procédé selon l'invention est particulièrement avantageuse car elle permet de réaliser en une seule étape l'adhérence définitive de toutes les couches du vitrage, et notamment celle de la feuille au support, en même temps que le traitement anti-buée. Dans ce cas, ce traitement a lieu dans un autoclave, dans les conditions de température et de pression correspondant à la fabrication usuelle du vitrage, notamment d'un pare-brise pour véhicules automobiles.

Cette phase de la fabrication peut avoir lieu dans un autoclave à air, mais cela nécessite alors une montée en température et en pression relativement longue, et une installation encombrante. Suivant une variante préférée de l'invention, on met en œuvre cette étape de la fabrication dans un autoclave à liquide, le liquide de compression étant le bain de tensio-actif lui-même.

Dans une variante, on trempe l'ensemble préassemblé de la couche et du support dans un bain de tensio-actif porté à une température d'environ 120 °C pendant environ 1 heure. A condition que la couche possède déjà son état optique définitif, obtenu par le préassemblage par calandrage par exemple, il n'est alors pas nécessaire de faire subir à l'ensemble un cycle d'autoclave.

Suivant un autre aspect de l'invention, on traite la couche, et notamment, on la trempe dans le bain de tensio-actifs, alors qu'elle est assemblée de façon définitive avec le support, dont elle constitue la couche externe. Cette variante peut être exécutée à température ambiante et à pression atmosphérique, et sa durée d'exécution est alors longue, mais on peut la réduire considérablement en augmentant la température et en l'exécutant dans un autoclave sous pression.

La description suivante de variantes d'exécution de l'invention, ainsi que de tests comparatifs de propriétés des vitrages traités fera apparaître d'autres caractéristiques et avantages de l'invention.

Les échantillons de vitrages dont les couches externes ont été traitées selon l'invention ont été soumis à 3 types de tests permettant la mesure de l'efficacité du traitement.

Un test d'embuage, dans lequel on maintient l'échantillon pendant 15 secondes au-dessus d'un bain d'eau thermostatée à 40 °C, après l'avoir laissé pendant 48 heures après le traitement à 23 °C sous une humidité relative de 50 %. On observe alors la transparence de l'échantillon, la forme des gouttes.

Un test de résistance à l'abrasion, selon la norme européenne R 43. Pour la mesure de cette résistance, on fait subir à une partie de l'échantillon une abrasion à l'aide d'une meule abrasive. Après 100 tours d'abrasion, on mesure avec un spectrophotomètre l'écart de flou entre la partie abrasée et la partie non abrasée. L'écart de flou (flou) doit être inférieur à 4 % pour que la couche ait la qualité anti-abrasive.

Un test de résistance à la rayure. Le test utilisé est connu sous l'appellation de « MAR resistant test » et il est pratiqué avec l'appareil ERICHSEN, type 413. On mesure la charge à porter sur une tête diamantée pour introduire une rayure persistante sur la couche de matière plastique traitée. La charge doit être supérieure ou égale à 20 grammes pour que la couche de matière plastique ait la propriété d'être autocicatrisable.

On a soumis à ces différents tests plusieurs échantillons traités et non traités.

L'échantillon de base est un vitrage de dimensions 300 × 300 mm comprenant une feuille de verre obtenue par le procédé de flottation sur bain d'étain, ci-après désigné sous l'appellation « verre float » de 2,7 mm d'épaisseur, une feuille intercalaire de polyvinylbutyral (PVB) de 0,76 mm d'épaisseur, une seconde feuille de verre float de 1,5 mm d'épaisseur. Dans les exemples 1 à 7, on fait varier les conditions suivantes : température, pression, composition du bain, et le traitement a lieu après l'assemblage définitif d'une feuille de polyuréthane thermodurcissable et du verre. Dans l'exemple 8, le traitement a lieu après assemblage partiel.

La couche de polyuréthane thermodurcissable traitée est celle obtenue selon le procédé décrit, par exemple, dans la publication de brevet français 2 398 606. C'est une couche de 0,4 mm d'épaisseur formée par exemple à partir du mélange suivant :

1 000 g d'un polyéther préparé par condensation d'oxyde de propylène avec un triol, ayant un poids moléculaire d'environ 450 et une teneur en radicaux OH libres de 10,5 à 12 %,

23 g de di-t-butyl-p-crésol,

0,5 g de dilaurate de dibutylétain et,

1 000 g d'un biuret de 1,6-hexaméthylènediisocyanate ayant une teneur en radicaux NCO libres de 21 à 25 %.

On apporte ce mélange de réaction au moyen d'une tête de coulée par exemple celle décrite dans la publication de brevet français 2 347 170, sur un support de coulée plan. On fait polymériser la couche par apport de chaleur. Cette couche est recouverte d'une couche adhésive en un polyuréthane thermoplasti-

4

que, obtenue à partir d'une composition coulée sur la couche de polyuréthane précédemment polymérisée. La feuille formée des deux couches a une épaisseur de 0,5 mm. Une telle feuille est décrite par exemple dans la publication de brevet français 2 398 606 déjà cité. Elle est détachée du support de coulée pour être ensuite assemblée sur un support, en particulier une feuille de verre.

On a procédé à des tests sur deux échantillons de référence.

L'exemple de référence 1 est l'échantillon de base recouvert de la feuille et non traité.

L'exemple de référence 2 concerne une feuille de verre traitée par trempage dans un bain contenant un mélange d'alcools alkyliques comportant de 12 à 14 atomes de carbone, éthoxylé par environ 7 moles d'oxyde d'éthylène par mole d'alcool. Il s'agit par exemple du produit commercialisé par la Société HENKEL/Dehydag sous le nom Dehydol® LS 7. On trempe le vitrage pendant 2 h dans un bain porté à 80 °C.

Les résultats des tests sont portés dans le tableau I.

Les résultats obtenus avec l'exemple de référence 2 sont tout à fait comparables à ceux obtenus avec une feuille de verre nu et non traitée. On peut en conclure que le traitement manque totalement d'efficacité lorsqu'on l'applique sur une couche de verre nu, ce qui justifie son efficacité et sa spécificité pour une matière plastique transparente telle le polyuréthane thermodurcissable.

## Exemple 1

On trempe pendant deux heures, à 80 °C, l'échantillon dans un bain contenant le produit Dehydol® LS 7 de la Société HENKEL/Dehydag.

## Exemple 2

On trempe pendant deux heures, à 80 °C, l'échantillon dans un bain contenant le produit de l'exemple 1, en solution aqueuse comprenant 67 % de substance active.

## Exemple 3

On trempe pendant deux heures, à 80 °C, l'échantillon dans un bain contenant un octylalcool éthoxylé par environ 4 moles d'oxyde d'éthylène par mole d'alcool. Il s'agit par exemple du produit Dehydol® 04 de la Société HENKEL/Dehydag.

## Exemple 4

On trempe pendant 100 heures à 20 °C l'échantillon dans un bain contenant le produit de l'exemple 3.

## Exemple 5

On trempe pendant une demi-heure à 100 °C, dans un autoclave où règne une pression de 12 bars, l'échantillon dans un bain contenant le produit de l'exemple 4.

## Exemple 6

On trempe pendant 2 heures à 80 °C, l'échantillon dans un bain contenant un agent tensio-actif de type cationique, à savoir du chlorure de lauryldimethylbenzylammonium dissous dans l'eau, la solution comprenant 35 % de substance active. Il s'agit par exemple du produit Dehyquart® LDB de la Société HENKEL/Dehydag.

## Exemple 7

On trempe pendant 2 heures à 80 °C, l'échantillon dans un bain contenant un agent tensio-actif de type anionique, à savoir un mélange de sulfate de sodium alkylique comportant de 12 à 16 atomes de carbone, la solution comprenant 30 % de substance active. Il s'agit par exemple, du produit SULFOPAN® 101 de la Société HENKEL/Dehydag.

## Exemple 8

Le traitement par trempage a lieu alors que la couche n'est pas assemblée définitivement au support. A température ambiante, on forme par calandrage un assemblage préliminaire de la feuille et du verre, puis on introduit le vitrage dans un bain de tensio-actifs, par exemple celui décrit à l'exemple 5, on place l'ensemble dans un autoclave, et on applique une température de 100 °C et une pression de 12 bars pendant une demi-heure.

Les résultats des tests démontrent l'efficacité de ce procédé, aussi bien pour la réalisation de

**0 133 111**

l'adhésion de la couche de polyuréthane au vitrage feuilleté que pour la diffusion des molécules de tensio-actifs dans la structure de la couche.

Les résultats regroupés dans le tableau 1 démontrent en particulier l'efficacité du traitement selon l'invention sur le double plan de la résistance à l'abrasion et de l'action anti-buée. Si on compare par exemple l'écart de flou que présente un échantillon de vitrage recouvert d'une couche anti-buée selon l'invention, et un échantillon recouvert d'une couche usuelle, on observe une différence pouvant atteindre 2 %.

Il peut être nécessaire, pour parfaire la résistance à l'abrasion d'un vitrage de sécurité recouvert d'une couche de matière plastique transparente hautement élastique et réticulée tridimensionnellement, de traiter la feuille avec une composition à base de cire. Ce traitement supplémentaire peut être évité lorsqu'on fait diffuser des tensio-actifs dans la surface de la feuille : en effet l'écart de flou mesuré par le test de résistance à l'abrasion est deux fois moindre sur un vitrage ayant subi un traitement anti-buée selon l'invention et aucun traitement par une composition à base de cire, que sur un vitrage ayant subi le traitement inverse.

Pour confirmer les effets anti-buée sur des pare-brises de sécurité pour véhicules automobiles de même structure que celle des échantillons décrits dans les exemples précédents, on a procédé à des essais accélérés d'embuage dans un véhicule dont une partie seulement du pare-brise était traitée.

On a, à cet effet, installé une bouilloire électrique à l'intérieur du véhicule, afin d'obtenir l'apport d'humidité nécessaire à la simulation. Après trois minutes de fonctionnement de la bouilloire, et la température extérieure étant de 5 °C environ, le pare-brise est recouvert de buée, et cela de façon beaucoup plus nette sur la partie non traitée. Cette partie est pratiquement opaque, tandis que la partie traitée permet encore une visibilité satisfaisante : on met alors en route le ventilateur pendant deux minutes environ.

La partie traitée retrouve sa transparence initiale tandis que la partie non traitée du pare-brise conserve un aspect trouble, gênant pour l'automobiliste.

Tableau I

| | | TEST D'EMBUAGE | TEST D'ABRASION AUGMENTATION DE TROUBLE (%) | RESISTANCE A LA RAYURE (g) |
|---|---|---|---|---|
| Ex. de réf. 1 | | couche de buée épaisse, laiteuse composée de nombreuses petites gouttes | 3,7 | 21 |
| Ex. de réf. 2 | | couche de buée épaisse et laiteuse avec de nombreuses petites gouttes supprimant la transparence | - | - |
| Ex. 1 | | film d'eau continu avec une transparence satisfaisante | 1,5 | 22 |
| Ex. 2 | | film d'eau continu avec une transparence satisfaisante | 2,7 | 21 |
| Ex. 3 | | gouttes d'eau plates qui se fondent pour former un film de transparence acceptable | 1,4 | 20 |
| Ex. 4 | | gouttes d'eau plates qui se fondent pour former un film de transparence acceptable | 1,2 | 15 |
| Ex. 5 | | film d'eau continu avec une transparence satisfaisante | 1,7 | 19 |

6

# 0 133 111

Tableau I (Suite)

| | | TEST D'EMBUAGE | TEST D'ABRASION AUGMENTATION DE TROUBLE (%) | RESISTANCE A LA RAYURE (g) |
|---|---|---|---|---|
| Ex. 6 | | gouttes d'eau assez plates avec une transparence accep- table | 3,6 | 23 |
| Ex. 7 | | couche de buée presque lai- teuse avec une transparence réduite | 3,7 | 33 |
| Ex. 8 | | film d'eau continu avec une transparence satisfaisante | 1,8 | 21 |

## Revendications

1. Couche de polyuréthane transparente, hautement élastique, réticulée tridimensionnellement, pouvant être utilisée en tant que couche externe antilacérante et/ou autocicatrisable d'un vitrage feuilleté comprenant un support monolithique ou feuilleté, en verre de silicate ou en matière plastique, caractérisée en ce qu'elle contient au moins un agent tensio-actif dans sa structure réticulée.

2. Couche selon la revendication 1, caractérisée en ce que les agents tensio-actifs sont choisis parmi les tensio-actifs de type non ionique.

3. Couche selon la revendication 2, caractérisée en ce que les agents tensio-actifs sont choisis parmi les alcools gras polyéthoxylés.

4. Couche selon la revendication 3, caractérisé en ce que l'agent tensio-actif est un mélange d'alcools alkyliques comportant de 12 à 14 atomes de carbone, éthoxylés par environ 7 moles d'oxyde d'éthylène par mole d'alcool.

5. Couche selon la revendication 3, caractérisé en ce que l'agent tensio-actif est un octylalcool éthoxylé par environ 4 moles d'oxyde d'éthylène par mole d'alcool.

6. Couche selon la revendication 1, caractérisé en ce que l'agent tensio-actif est cationique.

7. Couche selon la revendication 1, caractérisé en ce que l'agent tensio-actif est anionique.

8. Procédé de fabrication d'une couche selon l'une des revendications 1 à 7, caractérisé en ce qu'on forme la couche au préalable de façon connue et on la traite en la mettant en contact avec une composition comprenant au moins un agent tensio-actif, dans les conditions et pendant un temps suffisant pour permettre la diffusion de molécules de tensio-actifs dans au moins une partie de l'épaisseur de la couche.

9. Procédé selon la revendication 8, caractérisé en ce que la composition est sous forme liquide.

10. Procédé selon la revendication 9, caractérisé en ce que le traitement de la couche se fait par trempage dans une composition liquide.

- 11. Procédé selon l'une des revendications 8 à 10, caractérisé en ce que le traitement a lieu à une température comprise entre 20 et 120 °C et de préférence entre 80 et 100 °C.

12. Procédé selon l'une des revendications 8 à 11, caractérisé en ce qu'on exerce une pression élevée de l'ordre de 5 à 15 bars au cours du traitement.

13. Procédé selon l'une des revendications 8 à 12, caractérisé en ce que on traite la couche alors qu'elle est déjà assemblée avec un support pour constituer un vitrage feuilleté.

14. Procédé selon la revendication 13, caractérisé en ce que la couche étant assemblée de façon préliminaire au support, on effectue le traitement dans un autoclave qui sert simultanément à réaliser l'assemblage définitif du vitrage feuilleté.

15. Procédé selon la revendication 14, caractérisé en ce que le traitement a lieu dans un autoclave à liquide sous pression, le liquide de compression étant la composition liquide de tensio-actifs.

16. Vitrage de sécurité, notamment vitrages automobiles, de bâtiments, verres de lunettes, lentilles, masques, écrans, comprenant une couche externe selon la revendication 1 à 7.

## Claims

1. A layer of transparent polyurethane which is highly elastic and cross-linked in three dimensions, which may be used as an exterior anti-laceration and/or self-healing layer of a laminated pane comprising

7

a monolithic or laminated support, of silicate glass or plastics material, characterised in that it contains at least one surface active agent in the cross-linked structure.

2. Layer according to claim 1, characterised in that the surface active agents are selected from surface active agents of the non-ionic type.

3. Layer according to claim 2, characterised in that the surface active agents are selected from polyethoxylated fatty alcohols.

4. Layer according to claim 3, characterised in that the surface active agent is a mixture of alkyl alcohols comprising 12 to 14 carbon atoms ethoxylated by about 7 moles of ethylene oxide per mole of alcohol.

5. Layer according to claim 3, characterised in that the surface active agent is an octylalcohol ethoxylated by about 4 moles of ethylene oxide per mole of alcohol.

6. Layer according to claim 1, characterised in that the surface active agent is cationic.

7. Layer according to claim 1, characterised in that the surface active agent is anionic.

8. Method of making a layer according to one of claims 1 to 7, characterised in that the layer is first made in known manner and is treated by putting it in contact with a composition comprising at least one surface active agent, under conditions and for a time sufficient to allow diffusion of the molecules of surface active agent in at least part of the thickness of the layer.

9. Method according to claim 8, characterised in that the composition is in liquid form.

10. Method according to claim 9, characterised in that treatment of the layer is carried out by soaking in a liquid composition.

11. Method according to one of claims 8 to 10, characterised in that the treatment takes place at a temperature from 20 to 120 °C and preferably from 80 to 100 °C.

12. Method according to one of claims 8 to 11, characterised in that an elevated pressure of the order of 5 to 15 bars is exerted during treatment.

13. Method according to one of claims 8 to 12, characterised in that the layer is treated when it is already assembled together with a support to form a laminated pane.

14. Method according to claim 13, characterised in that after the layer has been preliminarily assembled with the support, the treatment is carried out in an autoclave which also carries out final assembly of the laminated pane.

15. Method according to claim 14, characterised in that the treatment is carried out in an autoclave containing liquid under pressure, the compression liquid being the liquid comprising a surface active agent.

16. Safety panes, especially windows for vehicles and buildings, spectacles, lenses, masks, and screens comprising an external layer according to one of claims 1 to 7.

## Patentansprüche

1. Hochelastische, dreidimensional vernetzte, transparente Polyurethanschicht, die als reißfeste und/oder selbstheilende Außenschicht eines Verbundglases mit einem monolithischen oder Verbundträger aus Silikatglas oder Kunststoffmaterial benutzt werden kann, dadurch gekennzeichnet, daß sie in ihrer vernetzten Struktur mindestens ein grenzflächenaktives Mittel enthält.

2. Schicht nach Anspruch 1, dadurch gekennzeichnet, daß die grenzflächenaktiven Mittel aus nichtionischen grenzflächenaktiven Mitteln ausgewählt sind.

3. Schicht nach Anspruch 2, dadurch gekennzeichnet, daß die grenzflächenaktiven Mittel ausgewählt sind aus polyethoxylierten Fettalkoholen.

4. Schicht nach Anspruch 3, dadurch gekennzeichnet, daß das grenzflächenaktive Mittel eine Mischung von Alkylalkoholen mit 12 bis 14 Kohlenstoffatomen ist, die im Mittel mit 7 Molen Ethylenoxid pro Mol Alkohol ethoxyliert ist.

5. Schicht nach Anspruch 3, dadurch gekennzeichnet, daß das grenzflächenaktive Mittel ein Octylalkohol ist, der im Mittel mit 4 Molen Ethylenoxid pro Mol Alkohol ethoxyliert ist.

6. Schicht nach Anspruch 1, dadurch gekennzeichnet, daß das grenzflächenaktive Mittel kationisch ist.

7. Schicht nach Anspruch 1, dadurch gekennzeichnet, daß das grenzflächenaktive Mittel anionisch ist.

8. Verfahren zum Herstellen einer Schicht nach einem der Ansprüche 1 bis 7, dadurch gekennzeichnet, daß man erst is bekannter Weise die Schicht herstellt und sie dann behandelt, indem man sie mit einer Zubereitung, die mindestens ein grenzflächenaktives Mittel enthält, unter Bedingungen und für eine Zeit in Kontakt bringt, die ausreichen, um die Diffusion der Moleküle des grenzflächenaktiven Mittels in mindestens einen Teil der Dicke der Schicht zu gestatten.

9. Verfahren nach Anspruch 8, dadurch gekennzeichnet, daß die Zubereitung flüssig ist.

10. Verfahren nach Anspruch 9, dadurch gekennzeichnet, daß die Behandlung der Schicht durch Eintauchen in eine flüssige Zubereitung erfolgt.

11. Verfahren nach einem der Ansprüche 8 bis 10, dadurch gekennzeichnet, daß die Behandlung bei einer Temperatur zwischen 20 und 120 °C und vorzugsweise zwischen 80 und 100 °C stattfindet.

12. Verfahren nach einem der Ansprüche 8 bis 11, dadurch gekennzeichnet, daß man während der Behandlung einen erhöhten Druck von 5 bis 15 bar ausübt.

13. Verfahren nach einem der Ansprüche 8 bis 12, dadurch gekennzeichnet, daß man die Schicht behandelt, nachdem sie bereits mit einem Träger zur Bildung eines Verbundglases zusammengesetzt worden ist.

14. Verfahren nach Anspruch 13, dadurch gekennzeichnet, daß man die Behandlung der Schicht, die in einer vorläufigen Weise mit dem Träger zusammengesetzt ist, in einem Autoclaven ausführt, der gleichzeitig dazu dient, den entgültigen Zusammenbau des Verbundglases zu bewirken.

15. Verfahren nach Anspruch 14, dadurch gekennzeichnet, daß die Behandlung in einem Autoclaven mit Druckflüssigkeit stattfindet, wobei die Druckflüssigkeit die flüssige Zubereitung der grenzflächenaktiven Mittel ist.

16. Sicherheitsglas, insbesondere Glas für Automobile, Schiffe, Brillen, Linsen, Masken, Schirme mit einer Außenschicht nach Anspruch 1 bis 7.